(19) **Europäisches Patentamt / European Patent Office / Office européen des brevets**

(11) **EP 1 395 639 B2**

(12) **NOUVEAU FASCICULE DE BREVET EUROPEEN**
Après la procédure d'opposition

(45) Date de publication et mention de la décision concernant l'opposition:
**10.04.2013 Bulletin 2013/15**

(45) Mention de la délivrance du brevet:
**27.06.2007 Bulletin 2007/26**

(21) Numéro de dépôt: **02703683.9**

(22) Date de dépôt: **08.02.2002**

(51) Int Cl.:
*C09J 153/00* (2006.01)     *C09J 153/02* (2006.01)
*B32B 7/12* (2006.01)     *B65D 77/20* (2006.01)

(86) Numéro de dépôt international:
**PCT/FR2002/000491**

(87) Numéro de publication internationale:
**WO 2002/064694 (22.08.2002 Gazette 2002/34)**

(54) **ADHESIFS THERMOFUSIBLES AUTO-ADHESIFS EXTRUDABLES A CHAUD ET LEUR UTILISATION DANS LES FILMS MULTICOUCHES**

SCHMELZ-EXTRUDIERBARE, SELBSTKLEBENDE SCHMELZHAFTKLEBSTOFFE UND IHRE ANWENDUNGEN IN MEHRSCHICHTFILMEN

HOT-EXTRUDABLE THERMOFUSIBLE SELF-ADHESIVES AND THE USE THEREOF IN MULTI-LAYER FILMS

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **09.02.2001 FR 0101879**

(43) Date de publication de la demande:
**10.03.2004 Bulletin 2004/11**

(73) Titulaire: **BOSTIK SA**
**92400 Courbevoie (FR)**

(72) Inventeurs:
• **BARDIOT, Anne**
**F-60280 Venette (FR)**
• **SAJOT, Nicolas**
**F-60200 Compiègne (FR)**
• **GERARD, Pierre**
**F-64140 Lons (FR)**
• **NOTTEAU, Christophe**
**F-60400 Noyon (FR)**

(74) Mandataire: **Fulconis, Renaud et al**
**August & Debouzy avocats**
**6-8 Avenue de Messine**
**75008 Paris (FR)**

(56) Documents cités:
| | |
|---|---|
| **EP-A- 0 676 426** | **EP-A- 0 802 251** |
| **EP-A- 1 053 952** | **EP-A2- 0 160 975** |
| **WO-A-95/16755** | **WO-A1-99/20709** |
| **US-A- 4 388 349** | **US-A- 4 792 584** |
| **US-A- 5 266 394** | **US-A- 5 403 658** |
| **US-A- 5 670 577** | **US-A- 5 714 254** |
| **US-A- 5 853 874** | **US-B1- 6 184 285** |

Remarques:
Le dossier contient des informations techniques présentées postérieurement au dépôt de la demande et ne figurant pas dans le présent fascicule.

**Description**

La présente invention concerne des auto-adhésifs thermofusibles coextrudables à chaud particulièrement adaptés à la confection de films multicouches destinés aux emballages à ouvertures et refermetures faciles dits « repositionnables ».

Les films utilisés dans ces emballages comptent au moins trois couches à savoir une couche extérieure destinée à être complexée par la suite, une couche scellante et sécable définissant tout ou partie de la surface interne de l'emballage et entre elles une couche d'adhésif thermofusible qui les solidarisent.

Dans ce type d'emballage, l'adhésif joue un rôle essentiel dans la mesure où, une fois l'emballage ouvert par l'utilisateur final, la qualité de la refermeture et de la réouverture dépendra de la performance de l'adhésif qui naturellement est un auto-adhésif, c'est-à-dire un adhésif collant par simple pression manuelle. Ces adhésifs sont habituellement dénommés PSA (Pressure Sensitive Adhesives).

Différentes techniques ou procédés peuvent être mis en oeuvre pour l'obtention de films multicouches tels que ceux utilisés dans le domaine des emballages « repositionnables », on citera la lamination-couchage, la coextrusion-couchage, la coextrusion à plat et la coextrusion soufflage de gaine (Réf : Plastics Extrusion Technology, Friedhelm Hensen Editor, Carl Hanser Verlag, Munich, 1988).

Le brevet EP 0,160,975 (NYFFELER, CORTI AG) décrit une feuille multicouches scellable à chaud ou à froid pour emballages refermables. La structure décrite comporte notamment « une feuille collante de façon permanente constituée d'un auto-adhésif, se composant par exemple de produits collants à fusion à chaud (thermofusibles) à base de copolymères Ethylène / Acétate de vinyle (EVA), de copolymères masse Styrène / Butadiène / styrène (SBS), de copolymères masse Styrène / Isoprène / Styrène (SIS), ou de polyacrylates, ou autre ». Les formulations d'adhésifs sont décrites de façon très succincte et la structure revendiquée est obtenue par optimisation du procédé et non de l'adhésif. Le procédé utilisé demande a priori un nombre important d'étapes.

Le brevet US 5,089,320 (JAMES RIVER) concerne un film multicouches pour emballage refermable obtenu par coextrusion ou coextrusion couchage. Ce brevet décrit plus précisément les adhésifs mis en oeuvre à savoir des PSA comportant 40 à 80 % poids d'un élastomère thermoplastique, tel qu'un copolymère block Styrène-Isoprene-Styrène (SIS) ou un copolymère block Styrène-Butadiène-Styrène (SBS) comme KRATON[®] D-1107 (de KRATON POLYMERS) et 20 à 60 % d'un agent tackifiant tel qu'une résine pétrolière (ESCOREZ[®] 1310 LC de EXXON MOBIL Chemical).Ce brevet mentionne des forces d'ouverture de 4 à 9 N/cm et de réouverture de 1 à 7 N/cm, les exemples cités ne faisant apparaître que de faibles valeurs de réouverture de l'ordre de 1 à 2 N/cm.

Le brevet GB 2,319,746 (DOLPHIN PACKAGING MATERIALS LIMITED) décrit deux films, l'un servant de réceptacle après thermoformage, l'autre servant d'opercule destiné à être thermoscellé sur le contour du premier film, et contenant une couche d'adhésif de type PSA, constitué d'élastomère et résine tackifiante tel le M3062 d'Ato Findley Inc., la couche scellante des 2 films étant un ionomère, par exemple un SURLYN[®] de Dupont, un EMA ou un copolymère EMA-EBA. A nouveau, ce brevet donne une description très générale de l'adhésif, et la structure est optimisée par le procédé, en préconisant notamment d'utiliser des résines ionomères comme couche scellante, ce qui rend le coût de l'emballage élevé.

La demande de brevet EP 1,053,952 de SOPLARIL décrit un emballage refermable, tant rigide que souple, tant sous-gaz que sous-vide, obtenu à partir d'une structure coextrudée. Les performances de l'emballage sont ici obtenues soit par optimisation du procédé, en particulier par une technique de refermeture de bulle avec l'adhésif comme couche intérieure de la bulle, soit par modifications de l'adhésif, en particulier par ajout de charges ou d'agents de processabilité, ce qui diminue alors les performances auto-adhésives requises pour une refermeture permettant d'assurer convenablement la protection du contenu des emballages, ce défaut étant caractérisé par une force de réouverture trop faible.

En résumé, les films multicouches utilisés dans les divers systèmes d'emballage ne donnent pas entière satisfaction, soit parce que la force à appliquer à l'ouverture est trop importante, soit parce que la refermeture n'est pas de qualité suffisante ou soit encore parce que la structure désirée nécessite un procédé difficile à mettre en oeuvre entraînant un surcoût ou un manque de productivité.

Il est nécessaire de disposer d'un adhésif qui, au sein du film multicouches, confère à l'emballage final réalisé des propriétés de première ouverture facile et de cycles refermetures/réouvertures satisfaisantes, sans impliquer de modifications compliquées du procédé. Il faut donc d'une part disposer d'un adhésif présentant de bonnes propriétés de mise en oeuvre lors de la fabrication d'un film multicouches par coextrusion, d'autre part que la couche de ce même adhésif, présente au sein du film, confère à l'emballage final des qualités de première ouverture facile et de cycles refermetures/réouvertures satifaisantes. Par première ouverture facile on entend l'application d'une force inférieure ou égale à 15 N/cm, avec une force de propagation, dès lors que l'emballage a été ouvert, de l'ordre de 5-11 N/cm. L'adhésif doit également permettre une refermeture autocollante facile des emballages, c'est-à-dire un repositionnement manuel aisé des 2 parties du film après une série de fermetures / réouvertures, une dizaine environ, pour des forces de réouverture supérieures à 2 N/cm, de préférence supérieures ou égales à 4 N/cm.

Il s'agit également d'introduire un adhésif thermofusible dans une structure multicouches à l'aide d'un procédé qui soit en accord avec les impératifs économiques et industriels. Les autres techniques de type lamination-couchage et coextrusion-couchage présentent l'inconvénient soit d'ajouter une étape supplémentaire dans le procédé de fabrication de films complexes, soit de présenter des défauts d'étirabilité ou de compatibilité qui pour le moins peuvent limiter les cadences de production. L'incorporation de l'adhésif selon l'invention en tant que matériau thermoplastique par coextrusion permet de répondre avantageusement à ces impératifs. Un procédé particulièrement adapté pour des cadences de production élevées est la coextrusion-soufflage de gaine.

Dans le domaine des adhésifs, on distingue deux types de rupture au pelage, la rupture adhésive qui intervient au niveau de l'interface adhésif/support et la rupture cohésive qui intervient au sein même de la couche d'adhésif, chacun des supports portant une fraction de l'adhésif. Une rupture de type cohésive améliore considérablement la propriété de « refermabilité » de l'emballage. Toutefois cette propriété intrinsèque de l'adhésif va généralement à l'encontre des propriétés de viscosité et de cohésion à chaud requises par la coextrusion.

Il faut donc pouvoir disposer d'adhésifs thermofusibles présentant à la fois une viscosité à chaud élevée (à une température d'au moins 130°C) permettant la coextrusion, et une cohésion à froid (de -20 à + 40°C) ajustée favorisant une rupture de type majoritairement cohésive lors de la première ouverture, ces deux propriétés étant antagonistes et difficiles à obtenir simultanément.

On entend par adhésif à viscosité élevée un adhésif dont la viscosité mesurée selon la méthode classique Brookfield en cuves thermosel selon la norme ASTM D-3236 est supérieure à 200000 mPa.s à une température de 200°C.

La demanderesse a maintenant trouvé de manière inattendue que les compositions thermofusibles auto-adhésives selon l'invention permettaient de concilier ces deux propriétés antagonistes.

L'invention a pour objet l'adhésif de la revendication 1.

La viscosité η (mesurée selon la Norme ISO 11443), à une température de 150°C, température de mise en oeuvre de la coextrusion, et pour un gradient de cisaillement « dγ/dt » situé entre 100 et 1000 s$^{-1}$, est comprise dans un domaine situé au-dessus de la courbe définie par l'équation de puissance :

$$\eta = 22000 \cdot (d\gamma/dt + 200)^{-0,82}$$

Limite Supérieure du domaine

et la force de résistance à la traction pour une vitesse de traction de 1 m.s$^{-1}$ est comprise dans un domaine situé au-dessous de la courbe moyenne :

telle que définie par l'équation polynomiale :

$$y = -2,82.10^{-16}.x^6 + 5,92.10^{-13}.x^5 - 4,97.10^{-10}.x^4 + 2,15.10^{-7}.x^3$$
$$- 4,99.10^{-5}.x^2 + 6,26.10^{-3}.x + 4,71.10^{-2}$$

dans laquelle y ,ordonnée, représente la contrainte exprimée en MPa et x, abscisse, représente la déformation exprimée en pourcentage (%).

La force de résistance à la traction pour une vitesse de traction de 1 m.s$^{-1}$ est mesurée selon la méthode suivante :

- Des haltères sont prélevées à l'aide d'un emporte-pièce de type H2 dans des plaques d'auto-adhésif thermofusible de 80x80x2mm qui ont été préalablement préparées à 160°C avec un cycle de pression et dégazage.
- Le test de traction est réalisé au moyen d'une machine d'essais mécaniques hydraulique de type MTS 831. La distance entre les mors (ou longueur utile Lo) est de 50mm, le déplacement maximum du vérin hydraulique L est de 320mm, ce qui permet d'atteindre une déformation maximum de 640% (100xL/Lo). La vitesse de déplacement du piston est définie à 1 m.s$^{-1}$. Au cours de l'essai, on enregistre la contrainte en fonction du déplacement. Les courbes expérimentales reportent la contrainte (exprimée en MPa) en fonction de la déformation (exprimée en %).

Les copolymères blocs selon l'invention sont de type S-I-S.

Le copolymère bloc ou le mélange de copolymères blocs selon l'invention comprend :

- un pourcentage massique de la phase styrène dans le polymère compris entre 10 et 25 %,
- un pourcentage massique de structures di-blocs dans le polymère supérieur à 40 %,
- un indice d'écoulement (MFI = Melt Flow Index) selon la condition n°10 de la norme NFT 51-016 compris entre 2 et 40 g/10min.

Comme résine tackifiante compatible, on utilisera une résine ou un mélange de résines classiquement utilisées dans les adhésifs thermofusibles choisi parmi :

- la colophane ou ses dérivés, notamment les esters de colophane, éventuellement hydrogénés,
- les polyterpènes, les terpène-phénoliques ou leurs dérivés,
- les polymères éventuellement hydrogénés issus de coupes aliphatiques ou les mélanges de ces coupes,

ayant un point de ramollissement mesuré selon la norme EN 1238 compris entre 5 et 150°C, et de préférence entre 80 et 140°C la résine tackifiante compatible comportant une résine majoritaire ayant un caractère aliphatique marqué.

Afin de conférer à l'adhésif thermofusible selon l'invention un pouvoir collant adapté à l'application, la résine majoritaire est choisie avec un caractère aliphatique marqué, ceci afin d'obtenir une compatibilité suffisante entre la résine et la phase élastomérique, c'est-à-dire non styrénique du copolymère bloc. Le choix de cette résine majoritaire est guidé par la détermination de son point de trouble dans un solvant effectuée selon la méthode qui suit.

Dans 10 millilitres d'un mélange 1:2 en volume de méthylcyclohexane et d'aniline, 5 grammes de résine sont dissous à chaud et l'ensemble est mis à refroidir à température ambiante jusqu'à l'apparition d'un déphasage. Selon les conditions de ce test, la résine majoritaire présentant un intérêt pour le pouvoir collant de l'adhésif selon l'invention est choisie avec une température de déphasage supérieure à 60°C, et de préférence supérieure à 75°C.

La résine majoritaire sera choisie plus particulièrement parmi les familles polyterpéniques, les polymères issus de coupes $C_5$ éventuellement modifiés par des coupes $C_9$, les polymères issus de coupes $C_9$ partiellement ou totalement hydrogénées éventuellement modifiés par des coupes aliphatiques.

L'adhésif selon l'invention est constitué de :

- 45 à 85% en poids de copolymère ou d'un mélange de copolymères, de préférence 55 à 70 %,
- 15 à 55% en poids de résine tackifiante ou d'un mélange de résines tackifiantes, de préférence 30 à 45 %.

L'adhésif selon l'invention peut aussi contenir une fraction minoritaire d'un plastifiant, d'un stabilisant ou d'une charge, additifs classiquement utilisés dans les adhésifs thermofusibles.

Pour leur utilisation en coextrusion, les adhésifs de l'invention doivent se présenter sous forme de granulés. Les granulés d'auto-adhésifs thermofusibles selon l'invention peuvent être obtenus selon un procédé classique de fabrication, le mélange des constituants étant obtenu par extrusion (extrudeuse double-vis, co-malaxeur BUSS® ou autre) à chaud suivi ensuite d'une granulation de type coupe sous eau avec enrobage des granulés (par exemple avec une charge minérale telle que du talc).

Lors de la confection du film multicouches, l'auto-adhésif thermofusible sous forme de granulés est coextrudé entre 2 matériaux thermoplastiques (au moins) par coextrusion soufflage de gaine afin d'obtenir un film tricouches (au moins), lequel film possède alors une face scellable et sécable (ou déchirable), et une autre pouvant être complexée avec un autre film pour la réalisation d'un emballage.

Un exemple représentatif de film tricouches, réalisé avec l'auto-adhésif thermofusible selon l'invention, présente les épaisseurs suivantes :

- une couche scellable et sécable de 10 à 100 $\mu$m, de préférence de 10 à 30 $\mu$m,
- une couche d'auto-adhésif thermofusible de 10 à 30 $\mu$m, de préférence de 15 à 20 $\mu$m,
- une couche complexable de 10 à 100 $\mu$m, de préférence de 10 à 30 $\mu$m.

Lors de la coextrusion, l'adhésif thermofusible est préalablement plastifié par passage dans une vis à fourreau lisse présentant un faible cisaillement dans la zone d'alimentation. Le profil de température choisi pour l'adhésif va généralement de 50°C environ en entrée de vis à 140°C environ en sortie de vis, ledit profil peut être adapté en fonction de la géométrie de la vis retenue.

La couche d'auto-adhésif thermofusible est formée et combinée entre la couche scellable et la couche complexable en un film tricouches par coextrusion soufflage de gaine. La température de la filière est fixée en fonction des caractéristiques rhéologiques des matériaux choisis pour les couches scellable et complexable, mais de préférence inférieure ou égale à 180°C.

Les caractéristiques usuelles de la couche scellable et sécable sont bien connues de l'homme de l'art dans le cadre d'un procédé par coextrusion. La couche contient par exemple l'un des matériaux suivants (ou un mélange de ces matériaux) : EVA, EVA greffé (exemple : anhydride maléique, HEA, etc ...), EMA, PE, PE métallocène, PE greffé, PP greffé, ionomère (par exemple : SURLYN® de DUPONT) ; ainsi que des additifs tels que des antioxydants, charges, agents glissants, etc ... apportant la sécabilité, la stabilité thermique, la couleur et autres propriétés annexes recherchées pour les films destinés à être utilisés dans des emballages.

De la même manière, les caractéristiques usuelles de la couche complexable, connues de l'homme de l'art dans le cadre d'un procédé par coextrusion, sont par exemple les suivantes :

- elle contient l'un des matériaux suivants (ou un mélange de ces matériaux) : EVA, EVA greffé (exemple : anhydride maléique, HEA, etc ...), EMA, PE, PE métallocène, PE greffé, PP greffé, ionomère (exemple : SURLYN[®] de DUPONT), etc ... ; ainsi que des additifs tels que des antioxydants, charges, agents glissants, etc ... , apportant la stabilité thermique, la couleur et autres propriétés annexes recherchées pour les films destinés à être complexés et utilisés dans des emballages.

- Cette couche peut être de même nature que la couche scellable déchirable.
- Elle est traitée Corona avant bobinage du film à un traitement supérieur à 38 mN.m$^{-1}$ afin d'être ensuite reportée sur un autre film par contrecollage.

Le film tricouches obtenu peut être contrecollé avec un film non scellable afin de conférer à l'emballage final des propriétés mécaniques, barrières, d'impression, etc ... A titre de film rapporté, on citera de manière non limitative les matériaux suivants : PET, PET métallisé, OPP, OPA, CPA, PVC, APET, PAN, etc ...

La structure ainsi décrite (coextrudée puis complexée) peut être mise en oeuvre dans le cadre d'un procédé industriel de conditionnement (sachets, doypacks® ou barquettes thermoformées...), la structure pouvant ainsi être thermoscellée sur elle-même ou sur un support adapté. L'emballage ainsi obtenu par thermoscellage reste parfaitement fermé lorsqu'il est manipulé. La structure peut être pelée manuellement et facilement lors de la première ouverture de l'emballage, la couche scellante et sécable étant rompue de telle façon que l'adhésif apparaisse à la surface dans la zone de scellage. L'emballage peut être refermé par repositionnement de la structure dans la zone de soudure initiale par simple pression manuelle. Des réouvertures et refermetures successives sont possibles.

Selon les structures choisies, si l'on obtient à la première ouverture une rupture de type cohésive dans la couche d'adhésif thermofusible selon l'invention, la force maximale de propagation à la première ouverture de l'emballage sera généralement inférieure ou égale à 11 N/cm (caractérisant les emballages à ouverture facile). Si l'on obtient une rupture adhésive, la force d'ouverture sera alors systématiquement inférieure à la force de cohésion de l'adhésif thermofusible. Ce type de rupture sera également caractéristique d'un emballage à ouverture facile, mais risque de présenter des propriétés d'adhésion à la refermeture inférieures aux impératifs de l'utilisation. Pour l'application, les forces des 5 réouvertures suivantes seront supérieures à des valeurs de l'ordre de 2 N/cm, et de préférence supérieures ou égales à 4 N/cm.

Les auto-adhésifs thermofusibles selon l'invention pris isolément ou incorporés dans une structure multicouches peuvent aisément être identifiés à l'aide des techniques analytiques classiques de déformulation telles que :

- solubilisation et chromatographie liquide semi-préparative suivies d'une identification des différentes fractions par spectrométrie Infra-Rouge, chromatographie par perméation de gel, résonance magnétique nucléaire ou encore par calorimétrie différentielle (DSC).
- Microscopie Infra-Rouge ou Imagerie par Résonance Magnétique Nucléaire (IRM) directement sur les films multicouches.

EXEMPLES

Les exemples et exemples comparatifs qui suivent illustrent l'invention. On y a comparé l'efficacité de différentes compositions auto-adhésives thermofusibles. La composition 1 est un exemple selon l'invention, la composition 2 est un exemple sortant de l'invention.

Dans les exemples 1 et 2 qui suivent, les auto-adhésifs thermofusibles sont caractérisés par :

- un profil de viscosité mesurée par rhéométrie capillaire (selon la Norme ISO 11443), à une température de 150°C pour un gradient de cisaillement situé entre 100 et 1000 s$^{-1}$,
- un profil de résistance à la traction pour une vitesse de traction de 1m.s$^{-1}$, mesuré selon la méthode décrite précédemment,
- une composition en polymères constituée de mélanges de copolymères SIS, KRATON[®] D1111 et / ou D1113 de KRATON POLYMERS,
- une composition en résine tackifiante constituée d'un mélange de résine polyterpène, SYLVARES[®] TR7115 d'ARIZONA Chemicals caractérisée par un point de ramollissement de 115°C (méthode bille-anneau) et une masse moléculaire moyenne en masse de l'ordre de 1100 g/mole, et de résine issue de la polymérisation de coupes C5, WINGTACK[®] 95 de GOODYEAR Chemicals, caractérisées par un point de ramollissement de l'ordre de 95°C (méthode bille-anneau), une masse moléculaire moyenne en masse de l'ordre de 2000 g/mole.

Dans l'exemple 3, on a mis en oeuvre successsivement les adhésifs des exemples 1 et 2 dans une structure tricouches afin de comparer leur performance applicative. Les procédures de préparation des films et d'évaluation sont les suivantes :

Un film tricouches est préparé par coextrusion soufflage de gaine et présente la structure suivante :

- 20pm de couche complexable traitée Corona à plus de 38 mN/m,
- 20μm d'auto-adhésif thermofusible,
- 20pm de couche scellable sécable.

La couche complexable a pour composition :

- 60 % poids de résine Polyoléfinique obtenue par catalyse monosite ENGAGE® 8480 de DOW Chemicals,
- 35 % de résine PEBD LACQTENE® 1004FE30 de ATOFINA,
- 5 % d'additifs : le mélange maître FSU 105E de Schulman à titre d'agent glissant, et le mélange maître SILICE F15C de Schulman à titre d'agent anti-bloquant.

La couche d'adhésif a pour composition successivement celle décrite dans l'exemple 1 puis celle décrite dans l'exemple 2.
La couche soudante a pour composition pondérale :

- 65 % poids de résine Polyoléfinique obtenue par catalyse monosite ENGAGE® 8480 de DOW Chemicals,
- 20 % de résine PEMD, LACQTENE® 1020FE30,
- 10 % de mélange maître donnant la sécabilité à la couche scellable,
- 5 % d'additifs : le mélange maître FSU 105E de Schulman à titre d'agent glissant et le mélange maître SILICE F15C de Schulman à titre d'agent anti-bloquant.

Le film tricouches est réalisé par coextrusion soufflage de gaine sur une machine Compex 50/60/50 SA de Kiefel. Ce film tricouches entre dans la constitution de l'emballage, structure complexe, avec un film rigide et un film d'operculage. Cette structure est décrite en référence aux figures 1A, 1B, 2 et 3 annexées.
La figure 1A est une vue en coupe d'un emballage constitué d'un film rigide A et d'un d'un film d'operculage B soudés l'un à l'autre au niveau des bords 1 de l'emballage, la technique de soudure permettant de fragiliser cette zone de scellage.
La figure 1B est une vue du dessus de ce même emballage fermé.
La figure 2 est une vue en coupe agrandie et détaillée du bord 1 de l'emballage avec le film rigide A soudé au film d'operculage B dans la zone fragilisée avant ouverture de l'emballage. Le film d'operculage est constitué d'une couche scellante 2, d'une couche liante 3 et d'une couche support 4. Le film multicouches 5 de l'invention constitue un élément du film rigide A. Le film multicouches 5 comporte un film scellable et sécable 6, le film 7 d'adhésif de l'invention et un film complexable 8, ce dernier étant associé au film support rigide 10 par l'intermédiaire d'un liant 9, adhésif de complexage. Les films A et B sont soudés par l'intermédiaire des deux couches scellantes 2 et 6 formant ainsi la zone fragilisée.
La figure 3 représente le même bord 1 après ouverture de l'emballage. Une fraction 6' de la couche sécable 6 à laquelle une fraction 7' de la couche d'adhésif 7 est solidaire, est liée à la couche scellante 2 au niveau de la zone de fragilisation.
Afin d'évaluer les performances d'ouverture et de refermetures de la structure réalisée, le film tricouches ainsi décrit est ensuite contrecollé avec un film de PVC rigide de 350μm sur une complexeuse solvant, formant ainsi le film rigide A. Le contrecollage est réalisé à l'aide d'une colle polyuréthane en solvant la colle bicomposante Colflex® LG 59 A/B de Bostik Findley, le dépôt de la colle ayant lieu sur la face complexable du film tricouches.
Le film d'operculage B utilisé pour l'exemple a la composition suivante :

- 15 μm de PET biorienté enduit PVDC
- 3 μm de colle polyuréthane
- 23 μm de PET biorienté
- 3 μm de colle polyuréthane
- 50 μm de couche soudante

La couche soudante du film d'operculage a pour composition :

- 49% de résine PEBD

- 48% de résine PE linéaire Octène

- 3% d'additifs (glissant et antibloquant)

Pour l'application finale (voir schéma en annexe), le film rigide A est destiné à être thermoformé. Pour les mesures ci-dessous, il n'y a pas eu de thermoformage du film avant soudure du film rigide A avec le film d'operculage B.

La soudure des films A et B composant l'emballage se fait à l'aide d'une barrette de soudure en caoutchouc et d'une barrette de soudure plate, métallique et téflonnée, chauffée à 160°C, au contact du film d'operculage B. La soudure est effectuée en appliquant une pression de 5 bars pendant 3 secondes.

La soudure est effectuée sur une surface de 10 mm x 150 mm sur des échantillons de film A de 25 mm x 250 mm avec des éprouvettes de 25 mm x 400 mm de film B.

La force nécessaire à la première ouverture dans la soudure est mesurée par un test de résistance au pelage à 180°, à 200 mm.min$^{-1}$ sur une machine d'essais 5543 d'Instron (conformément à la norme NFT 54-122) réalisé après 24 heures de conditionnement à 23°C et 50% d'humidité après soudure.

La mesure de la résistance au pelage à la première réouverture est réalisée sur des éprouvettes ouvertes manuellement. Les 2 films A et B sont immédiatement repositionnés dans la zone de soudure et ils sont scellés à l'aide de 2 barrettes de soudure plates, métalliques et non chauffées. Le scellage est alors effectué en appliquant une pression de 0,5 bars pendant 3 secondes. La force nécessaire à la réouverture dans la soudure est mesurée par un test de résistance au pelage à 180°, à 200 mm.min$^{-1}$ sur une machine d'essais 5543 d'Instron (conformément à la norme NFT 54-122) réalisé après 24 heures de conditionnement à 23°C et 50% d'humidité après rescellage. Cette manipulation est répétée sur la même éprouvette afin de mesurer la résistance au pelage pour les réouvertures suivantes.

Pour chaque mesure, les résultats de résistance au pelage donnés sont des moyennes sur 3 éprouvettes et sont exprimés en N/cm.

Exemple 1 selon l'invention

La composition de l'auto-adhésif thermofusible 1 selon l'invention est regroupée dans le tableau A suivant :

| TABLEAU A | COMPOSITION 1 |
|---|---|
| Nature fraction polymère | SIS |
| Polymère dans l'adhésif (% poids) | 65 |
| styrène dans la phase polymère (% poids) | 18,0 |
| diblocs dans la phase polymère (% poids) | 45,0 |
| MFI calculé de la phase polymère (g/10min)(barycentre calculé des MFI des polymères utilisés, pondérés par leur fraction massique au sein de la fraction polymère) | 18,0 |
| résine polyterpène dans la phase résine (% poids) | 50 |
| Rhéométrie capillaire à 150°C et 1000 s-1 (Pa.s) | 107,0 |
| Traction à 1 m/s: force max à 640 % d'allongement (MPa) | 0,5 |

Cette composition présente un profil de viscosité entre 100 et 1000 s$^{-1}$ situé dans le domaine revendiqué, à savoir au-dessus de la limite inférieure précédemment définie.

**Viscosité Exemple 1 (Rhéométrie Capillaire)**

**Gradient de Cisaillement (s-1)**

ainsi qu'une force de résistance à la traction à 1 m.s$^{-1}$ située dans le domaine revendiqué, à savoir au-dessous de la limite supérieure précédemment définie.

## Résistance à la traction à 1m.s-1

**Déformation (%)**

L'ensemble des conditions selon l'invention étant respecté l'adhésif de l'exemple 1 illustre parfaitement celle-ci.

Exemple 2 (hors de l'invention)

La composition de l'auto-adhésif thermofusible 2 non conforme à l'invention est regroupée dans le tableau B suivant :

| TABLEAU B | COMPOSITION 2 |
|---|---|
| Nature fraction du polymère | SIS |
| Polymère dans l'adhésif (% poids) | 60 |
| Styrène dans la phase polymère (% poids) | 22,0 |
| Diblocs dans la phase polymère (% poids) | 15,0 |
| MFI calculé de la phase polymere (g/10 min)(barycentre calculé des MFI des polymères utilisés pondérés par leur fraction massique au sein de la fraction polymère) | 2,0 |
| Polyterpène dans la phase résine (%poids) | 60 |
| Rhéométrie capillaire à 150°C et 1000 s-1 (Pa.s) | 170,0 |
| Traction à 1 m/s: force max à 640% d'allongement (MPa) | 1,3 |

Viscosité Contre-Exemple 2 (Rhéométrie Capillaire)

Cette composition présente un profil de viscosité entre 100 et 1000 s$^{-1}$ situé au-dessus de la limite inférieure précédemment définie, mais une force de résistance à la traction à 1 m.s$^{-1}$ supérieure à la limite précédemment définie en raison de son faible taux de diblocs.

Résistance à la traction à 1m.s-1

L'une seulement des deux conditions selon l'invention étant respectées, l'exemple 2 illustre parfaitement l'état de l'art antérieur en matière d'auto-adhésif thermofusible et ne correspond pas aux critères selon l'invention.

Exemple 3 (comparatif)

Evaluation sur film tricouches obtenu par coextrusion soufflage de gaine puis mis en oeuvre dans une structure d'emballage tels que décrits précédemment.

L'exemple 3 illustre l'impact et les avantages de la composition 1 selon l'invention. On la compare à la composition 2 non-conforme à l'invention et caractéristique des adhésifs de l'art antérieur.

On obtient les résultats suivants (tableau C):

| TABLEAU C | STRUCTURE COEXTRUDEE, COMPLEXEE ET SOUDEE A PARTIR DE LA COMPOSITION 1 | STRUCTURE COEXTRUDEE, COMPLEXEE ET SOUDEE A PARTIR DE LA COMPOSITION 2 |
|---|---|---|
| Amorce à la 1ère ouverture en pelage à 200mm/min (N/cm) | 14,7 | > 30 |
| Propagation de la 1ère ouverture en pelage à 200mm/min (N/cm) | 9,8 | 27 |
| 2ème ouverture en pelage à 200mm/min après 1 repositionnement manuel (N/cm) | 6 | 9 |
| 5ème ouverture en pelage à 200 mm/min après 4 repositionnements manuels (N/cm) | 4 | 7 |
| Mode de Rupture à la première ouverture | cohésif | cohésif |

Pour la structure réalisée à partir de la composition 1 selon l'invention, les forces nécessaires à l'amorce et à la propagation de la première ouverture sont caractéristiques d'un emballage à ouverture facile. Ces forces, très élevées pour la structure réalisée à partir de la composition 2 rendent l'ouverture de l'emballage difficile.

Les forces mesurées lors de la réouverture après un repositionnement du film sont élevées pour les structures réalisées à partir des 2 compositions ce qui est le but recherché afin d'obtenir une bonne isolation au sein de l'emballage.

L'intérêt de la composition 1, pour la confection de films multicouches destinés aux emballages à ouverture et refermetures faciles dits « repositionnables », est ainsi démontré au travers de cet exemple comparatif. Les emballages utilisant ces films multicouches, préalablement obtenus par coextrusion, présentent un excellent compromis entre ouverture facile et bonne refermeture.

**Revendications**

1. Adhésif thermofusible auto-adhésif extrudable à chaud ayant à sa température d'utilisation finale généralemeat comprise entre -20 et +40 C, un module élastique G' inférieur à $5.10^3$ Pa comprenant un mélange :

   • de 15 à 55% en poids d'au moins une résine tackifiante compatible et
   • de 45 à 85% en poids d'un ou plusieurs copolymères blocs styréniques obtenus à partir de monomères styréniques et d'au moins un autre co-monomère tel que éthylène, propylène, isoprène, butadiène, butylène, lesdits copolymères constituant des structures des types diblocs, tri-blocs ou multiblocs, linéaires, radiales ou étoilées dans lesquelles le bloc intermédiaire est constitué d'au moins un des co-monomères énumérés ci dessus, les dits copolymères ayant :

      ➢ un pourcentage massique de la phase styrène dans le polymère compris entre 10 et 35 %.
      ➢ un pourcentage massique de structures di-blocs dans le polymère supérieur à 30 % et
      ➢ un indice d'écoulement selon la condition n°10 de la norme NFT 51-016 compris entre 2 et 40 g/10min,

   tel que ce mélange présente :

   • une viscosité, à une température de 150°C (mesurée selon la norme ISO 11443), comprise dans un domaine situé au dessus de la courbe de puissance :

$$\eta = 22000 . (d\gamma/dt + 200)^{-0,82}$$

   où $d\gamma/dt$, le gradient de cisaillement, est compris entre 100 et $1000\text{s}^{-1}$ ;

   • une force de résistance à la traction à une vitesse de traction de $1\ \text{m.s}^{-1}$. comprise dans le domaine situé au dessous de la courbe polynomiale :

$$y = -2,82.10^{-16}.x^6 + 5,92.10^{-13}.x^5 - 4,97.10^{-10}.x^4 + 2,15.10^{-7}.x^3 - 4,99.10^{-5}.x^2 + 6,26\ 10^{-3}.x + 4,71.10^{-2}$$

   où y, ordonnée, représente la contrainte exprimée en MPa et x, abscisse, représente la déformation exprimée en %;
   et dans lequel le pourcentage massique de la phase styrène dans le polymère est compris entre 10 et 25 % et le pourcentage massique de di-blocs dans le polymère est supérieur à 40 % et le copolymère bloc styrénique est un copolymère de type Styrène/Isoprène/Styrène,

   et dans lequel
   la résine tackifiante est une résine ou un mélange de résines classiquement utilisées dans les adhésifs thermofusibles choisies parmi:

   • la colophane ou ses dérivés, ester de colophane, éventuellement hydrogénés,
   • les polyterpènes, les terpène-phénoliques ou leurs dérivés,
   • les polymères éventuellement hydrogénés de coupes aliphatiques ou les mélanges de ces coupes,
   ayant un point de ramollissement mesuré selon la norme EN 1238 compris entre 5 et 150° C, préférentiellement entre 80 et 140°C;

   et dans lequel la résine tackifiante compatible comporte une résine majoritaire ayant un caractère aliphatique marqué;

la force de traction étant mesurée selon la méthode suivante :

- des haltères sont prélevées à l'aide d'un emporte-pièce de type H2 dans des plaques d'auto-adhésif thermofusible de 80x80x2mm qui ont été préalablement préparées à 160 C avec un cycle de pression et dégazage;
- le test de traction est réalisé au moyen d'une machine d'essais mécaniques hydraulique, la distance entre les mors définie comme la longueur utile Lo étant de 50mm, le déplacement maximum du vérin hydraulique L étant de 320mm, la déformation maximum étant de 640%, égale à 100xL/Lo, la vitesse de déplacement du piston étant définie à 1 m.s$^{-1}$.

2. Adhésif selon la revendication 1 **caractérisé en ce que** les teneurs pondérales respectives en copolymères et résines sont de 55 à 70 % de copolymère et 30 à 45 % de résine.

3. Adhésif selon l'une des revendications 1 à 2 **caractérisé en ce qu'**il contient une fraction minoritaire d'un plastifiant, d'un stabilisant ou d'une charge, tels que classiquement utilisé dans les adhésifs thermofusibles.

4. Procédé de fabrication de l'adhésif selon l'une des revendications 1 à 3 **caractérisé en ce qu'**il est mis sous forme de granulés par extrusion à chaud suivie d'une coupe sous eau.

5. Film multicouches constitué d'au moins trois couches dont une première est scellable et sécable, une deuxième est complexable et une troisième, constituée de l'adhésif des revendications 1 à 2, assure la cohésion de l'ensemble.

6. Utilisation du film de la revendication 5 pour la confection d'emballage à refermeture autocollante facile.

**Claims**

1. Hot-extrudable pressure-sensitive hot-melt adhesive having, at its end use temperature of generally between -20 and +40°C, an elastic modulus G' less than 5 x 10$^5$ Pa, comprising a blend of:

- from 15 to 55% by weight of at least one compatible tackifying resin and
- from 45 to 85% by weight of one or more styrene block copolymers obtained from styrene monomers and from at least one other comonomer, such as ethylene, propylene, isoprene, butadiene and butylene, said copolymers constituting linear, radial or star- shaped diblock, triblock or multiblock type structures in which the intermediate block consists of at least one of the abovementioned comonomers, said copolymers having:

- a mass percentage of the styrene phase in the polymer of between 10 and 35%;
- a mass percentage of diblock structures in the polymer greater than 30%; and
- a melt flow index according to condition No.10 of the NFT 51-016 standard of between 2 and 40 g/10 min;

such that this blend has:

- a viscosity, at a temperature of at least 150°C (measured according to the ISO 1143 standard), lying within a range located above the power curve:

$$\eta = 22\,000 \times (d\gamma/dt + 200)^{-0.82}$$

in which dy/dt, the shear rate, is between 100 and 1000 s$^{-1}$;
- a tensile strength at a pull rate of 1 m.s$^{-1}$ lying within the range located below the polynomial curve:

$$y = -2.82 \times 10^{-16}x^6 + 5.92 \times 10^{-13}x^5 - 4.97 \times 10^{-10}x^4$$
$$+ 2.15 \times 10^{-7}x^3 - 4.99 \times 10^{-5}x^2 + 6.26 \times 10^{-3}x + 4.71 \times 10^{-2},$$

where y, the ordinate, represents the stress expressed in MPa and x, the abscissa, represents the deformation expressed in %;

and wherein the mass percentage of the styrene phase in the polymer is between 10 and 25% and the mass percentage of diblocks in the polymer is greater than 40% and the styrene block copolymer is a copolymer of the styrene/isoprene/styrene type, and wherein the tackifying resin is a resin or a blend of resins conventionally used in hot-melt adhesives, such as:

- rosin or its derivatives, rosin esters, optionally hydrogenated;
- polyterpenes, terpene phenolics or derivatives thereof; and
- optionally hydrogenated polymers of aliphatic or aromatic cuts or blends of these cuts;

having a softening point measured according to the EN 1238 standard of between 5 and 150 °C, preferably between 80 and 140 °C;

and wherein the compatible tackifying resin comprises a predominant resin having a pronounced aliphatic character; the tensile strength being measured using the following method:

- dumbbells are cut, using a blanking die of the H2 type, from 80x80x2 mm plaques of a hot-melt pressure-sensitive adhesive that were prepared beforehand at 160° C. with a pressure and venting cycle;
- the tensile test is carried out by means of a hydraulic mechanical testing machine, the distance between the jaws defined as the useful length Lo is 50 mm, the maximum displacement of the hydraulic ram L is 320 mm, the maximum deformation being of 640% equal to $100 \times L/L_0$, the rate of displacement of the piston being set at $1 \text{ m.s}^{-1}$.

2. Adhesive according to Claim 1, **characterized in that** the respective weight contents of copolymers and resins are 55 to 70% of copolymer and 30 to 45% of resin.

3. Adhesive according to one of Claims 1 to 2, **characterized in that** it contains a minor fraction of a plasticizer, a stabilizer or a filler, such as those conventionally used in hot-melt adhesives.

4. Process for manufacturing the adhesive according to one of Claims 1 to 3, **characterized in that** it is processed in the form of granules by hot extrusion followed by cutting under water.

5. Multilayer film formed from at least three layers, a first one of which is sealable and separable, a second one of which is complexable and a third one of which, consisting of the adhesive of Claims 1 to 2, provides the cohesion of the assembly.

6. Use of the film according to Claim 5 for manufacturing an easy self-adhesive recloseable package.

**Patentansprüche**

1. Selbstklebender Heißschmelzklebstoff, der in der Hitze extrudierbar ist, dessen Endverwendungstemperatur im Bereich zwischen -20 und +40°C liegt, dessen elastisches Modul G' kleiner als $5.10^5$ Pa ist und der eine Mischung aus den folgenden Bestandteilen umfasst:

- zwischen 15 und 55 Gew.-% mindestens eines vertraglichen Klebrigmacherharzes sowie
- zwischen 45 und 85 Gew.-% eines oder mehrerer Styrol-Blockcopolymere, die aus Styrolmonomeren und mindestens einem weiteren Comonomer wie etwa Ethylen, Propylen, Isopren, Butadien, Butylen bestehen, wobei die Copolymers aus geradkettigen, radial en oder sternformigen Strukturen der Typen Diblock, Triblock oder Multiblock bestehen, innerhalb welcher der Zwischenblock aus mindestens einem der oben genannten Comonomere besteht, wobei die Copolymers Folgendes aufweisen:

- einen prozentualen Gewichtsanteil der Styrolphase am Polymer, der zwischen 10 und 35 % liegt;
- einen prozentualen Gewichtsanteil der Diblockstrukturen am Polymer, der mehr als 30% betragt, sowie
- einen Fließindex gemäß Bedingung Nr. 10 der Norm NFT 51-016, der zwischen 2 und 40 g/10 min liegt;

sodass die Mischung folgendes aufweist:

- eine Viskosität, bei einer Temperatur von mindestens 150°C (gemessen gemäß der Norm ISO 1143) die im Bereich oberhalb der folgenden Leistungskurve liegt:

$$\eta = 22\,000 \times (d\gamma/dt + 200)^{-0.82}$$

wobei "$d\gamma/dt$", der Schergradient, zwischen 100 und 1.000 $s^{-1}$ liegt;
- eine Zugfestigkeit, die, bei einer Zuggeschwindigkeit von 1 $m.s^{-1}$, im Bereich unterhalb folgender polynomischer Kurve liegt:

$$y = -2.82 \times 10^{-16}x^6 + 5.92 \times 10^{-13}x^5 - 4.97 \times 10^{-10}x^4$$
$$+ 2.15 \times 10^{-7}x^3 - 4.99 \times 10^{-5}x^2 + 6.26 \times 10^{-3}x + 4.71 \times 10^{-2},$$

wobei y, welches als Ordinate aufgetragen wird, die in MPa ausgedruckte Belastung darstellt und x, welches als Abzisse aufgetragen wird, die Verformung in % darstellt;
und wobei der prozentuale Gewichtsanteil der Styrolphase am Polymer zwischen 10 und 25% liegt und dass der prozentuale Gewichtsanteil an Diblocken am Polymer mehr als 40% betragt und es sich bei dem Styrol-Blockcopolymer um ein Copolymer des Typs Styrol/Isopren/Styrol handelt,

und wobei es sich bei dem Klebrigmacherharz um ein Harz oder eine Harzmischung handelt, die herkömmlicherweise in Heißschmelzklebstoffen zum Einsatz kommt, wie etwa:

- um Kolophonium oder dessen Derivate oder um Kolophoniumester, wobei diese moglicherweise hydriert sein können,
- um Polyterpene, um phenolische Terpene oder um deren Derivate,
- um möglicherweise hydrierte Polymere aus aliphatischen oder aromatischen Fraktionen oder um Mischungen aus diesen Fraktionen;
mit einem Etweichungspunkt, gemessen gemäß der Norm EN 1238, der zwischen 5 und 150°C, vorzugsweise zwischen 80 und 140°C, liegt;,

und wobei das vertragliche Klebrigmacherharz zu einem überwiegenden Teil ein Harz mit einer ausgeprägten aliphatischen Beschaffenheit aufweist.
die Zugfestigkeit wird gemäß dem folgenden Verfahren gemessen: - Aus Platten des heißschmelzbaren selbstklebenden Stoffes, die 80x80x2 mm messen und zuvor bei 160°C mittels eines Druck- und Entgasungszyklus vorbereitet wurden, werden mit Hilfe eines Stanzmessers des Typs H2 hantelförmige Stücke herausgetrennt;

- Der Zugtest wird mittels einer hydraulischen Maschine für mechanische Versuche durchgeführt, der Abstand zwischen den Zugbacken definiert als die Nutzlange Lo betragt 50 mm, die größtmögliche Auslenkung L des Hydraulikkolbens betragt 320 mm, die maximale Verformung von 640%, gleich 100xL/Lo, die Auslenkungsgeschwindigkeit des Kolbens wird auf 1 $m.s^{-1}$ eingestellt.

2. Klebstoff gemäß Anspruche 1, **dadurch gekennzeichnet, dass** die gewichtsmäßigen Gehalte an Copolymeren und Harzen bei 55 bis 70 % an Copolymeren beziehungsweise bei 30 bis 45% an Harz liegen.

3. Klebstoff gemäß einem der Anspruche 1 oder 2, **dadurch gekennzeichnet, dass** es sich bei der Fraktion, die zu einem geringeren Anteil in dem Klebstoff enthalten ist, um einen Weichmacher, einen Stabilisator oder einen Füllstoff, wie sie herkömmlicherweise in Heißschmelzklebstoffen zum Einsatz kommen, handelt.

4. Herstellungsverfahren fi.ir einen Klebstoff gemäß einem der Anspruche 1 bis 3, **dadurch gekennzeichnet, dass** dieser durch Extrusion in der Hitze mit anschließendem Schnitt unter Wasser derart geformt wird, dass er als Granulat vorliegt.

5. Mehrschichtige Folie, die aus mindestens drei Schichten besteht, von denen eine erste sich zum Versiegeln eignet und schneidbar ist, eine zweite komplexierbar ist, und eine dritte, welche aus dem Klebstoff der Ansprüche 1 bis 2 besteht, den Zusammenhalt der Gesamteinheit sicherstellt.

6. Verwendung der Folie des Anspruchs 5 zur Herstellung von Verpackungen mit selbstklebender Vorrichtung zum

einfachen Wiederverschließen.

**EP 1 395 639 B2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0160975 A
- US 5089320 A, JAMES RIVER
- GB 2319746 A
- EP 1053952 A

**Littérature non-brevet citée dans la description**

- Plastics Extrusion Technology. Carl Hanser Verlag, 1988